Europäisches Patentamt

European Patent Office

Office européen des brevets

(11) Veröffentlichungsnummer: **0 463 192 A1**

# EUROPÄISCHE PATENTANMELDUNG

(21) Anmeldenummer: **90111936.2**

(51) Int. Cl.⁵: **G01F 23/22**, G01F 23/24

(22) Anmeldetag: **23.06.90**

(43) Veröffentlichungstag der Anmeldung:
**02.01.92 Patentblatt 92/01**

(84) Benannte Vertragsstaaten:
**AT BE CH DE DK ES FR GB GR IT LI LU NL SE**

(71) Anmelder: **Bohn, Dieter**
**Otto-Hahn-Strasse 5**
**W-6703 Limburgerhof(DE)**

(72) Erfinder: **Bohn, Dieter**
**Otto-Hahn-Strasse 5**
**W-6703 Limburgerhof(DE)**

(54) **Verfahren und Messanordnung zur Messung des Füllstands von Flüssigkeiten in Flüssigkeitsbehältern.**

(57) Die Erfindung bezieht sich auf ein Verfahren, bei welchem zwei temperaturempfindliche Widerstandselemente (5,12) auf gleichem Niveau im Bereich des zu messenden Füllstands angeordnet sind. Das Meßergebnis hängt nur vom Füllstand des betreffenden Mediums, nicht jedoch von dessen Temperatur ab. Zeitgleich mit dem Meßergebnis für den Füllstand wird die Temperatur des Mediums sehr genau erfasst. Dazu wird das erste Meßelement (5) mit einem sehr kleinen Meßstrom beaufschlagt und die abfallende Meßspannung in einem zugegeordneten ersten Meßumformer (3) aufbereitet. Dessen temperaturproportionale Ausgangsspannung (6) steuert einen ersten Eingang eines ersten Differenzverstärkers (8). Sein Ausgang bestimmt den Meßstrom durch das zweite Meßelement (12), der größer ist als der Meßstrom durch das erste Meßelement (5). Die abfallende Meßspannung wird in einem zweiten Meßumformer (10) aufbereitet, dessen Ausgangsspannung (13), die ebenfalls proportional ist des die Meßelemente umgebenden Mediums, über ein der Kalibrierung dienendes Potentiometer (19) auf den zweiten Eingang des ersten Differenzverstärkers (8) rückgekoppelt wird. Dessen Ausgangsspannung ändert sich linear mit dem Füllstand. Mittels eines zweiten Differenzverstärkers (16) wird die Ausgangsspannung des ersten Differenzverstärkers (8) mit einer über ein Potentiometer (18) einstellbaren Konstantspannung verglichen, so daß am Ausgang (20) des zweiten Differenzverstärkers (16) ein füllstandsproportionaler Spannungswert ansteht. Zur Grenzfüllstandsmessung wird der zweite Differenzverstärker (16) durch einen Komparator mit Hysteresefunktion ersetzt. Eine Maximierung der Meßsicherheit bei der Grenzfüllstandsmessung wird durch Minimisierung der Abmessungen der beiden Meßelemente erreicht. Das Verfahren findet insbesondere Anwendung in Dosiereinrichtungen bei der Labor- und Prozeßautomation, in der Füllstandsüberwachung von Tanklagern sowie bei der Betriebskontrolle in Kraftfahrzeugen wie z.B. bei der Ölstandsüberwachung in Brennkraftmaschinen.

Zur meßtechnischen Erfassung der Füllhöhe einer Flüssigkeit in einem Behälter werden häufig temperaturempfindliche Widerstandselemente eingesetzt.

Frühere Lösungen beschränkten sich auf ein einziges dieser Elemente. Dabei wurden der Messung zwei gegenläufige Temperatureffekte zugrunde gelegt. Der erste Effekt betrifft die Erhöhung der Temperatur des Widerstandselements mittels direkter oder indirekter Heizung auf einen Wert, der deutlich über den maximal zu erwartenden Werten der umgebenden gasförmigen bzw. flüssigen Medien liegt. Der zweite, meßtechnische Effekt beruht auf der relativen Abkühlung des Widerstandselements beim Eintauchen in eine Flüssigkeit infolge der höheren Wärmeableitung gegenüber der gasförmigen Umgebung.

Solche einfachen Meßanordnungen waren zur kontinuierlichen Füllstandserfassung kaum geeignet, da die unterschiedlichen Temperaturen der Umgebung, der gasförmigen wie der flüssigen, unterschiedliche Temperaturänderungen im Widerstandselement zur Folge hatten. Wünschenswert ist jedoch eine nur von der Füllhöhe bzw. vom Füllstand abhängige Temperaturänderung des Widerstandselements.

Ein weiterer wesentlicher Nachteil dieses älteren Meßprinzips ist die Abhängigkeit von einer relativ hohen Heizleistung insbesondere wenn eine hohe Temperatur der Flüssigkeit zu erwarten ist, deren Füllstand erfasst werden soll.

Um beide Nachteile zu vermeiden wurde in späteren Lösungen ein zweites Meßelement in die Anordnung eingefügt. Es ist hinsichtlich der umgebenden Medien den gleichen Bedingungen ausgesetzt wie das erste Element, wird jedoch mit einem anderen Wert des elektrischen Stroms betrieben, um eine unterschiedliche Erwärmung gegenüber dem ersten Element herbeizuführen. Eines der beiden Elemente sollte die tatsächliche Temperatur des umgebenden Mediums möglichst genau erfassen und eine Kompensation der parasitären Einflüsse auf das Meßergebnis durch unterschiedliche Temperaturen der umgebenden Medien, insbesondere der Flüssigkeit bewirken.

In der DE-OS 3742783 ist eine Variante einer solchen Meßvorrichtung beschrieben. Ihre Aufgabe ist es, ohne weitere Justierung eine möglichst sichere und schnelle kontinuierliche Messung des Füllstands in Flüssigkeitsbehältern zu ermöglichen. Ein weiterer Vorteil der Einrichtung soll darin bestehen, daß sie neben dem Füllstand auch die Temperatur der jeweiligen Flüssigkeit erfasst. Die beiden Meßelemente dieser Vorrichtung werden mit elektrischen Strömen unterschiedlicher Zeitfunktionen gespeist, wobei eine Vergleichseinrichtung für einen Ausgleich der Energiebilanz über einen Meßzyklus sorgt. Dabei wird das erste Element kontinuierlich mit einem geringen Strom und periodisch mit einem hohen Strom und das zweite Element kontinuierlich mit einem mittleren Strom gespeist. Entsprechend entstehen im ersten Widerstandselement Temperaturänderungen, wobei die Temperatur abwechselnd größere und kleinere Werte als die Temperatur des zweiten Meßelements annimmt. Die Einschaltdauer des periodischen Heizstroms bzw. die durch ihn in das Meßelement eingebrachte elektrische Leistung können als Maß für die Eintauchtiefe gelten. In der Vorrichtung der DE-OS 3742783 werden Füllstand und Temperatur nacheinander gemessen, der Füllstand während der Stromimpuls ansteht, die Temperatur während der Strompause. Entgegen der angestrebten kontinuierlichen Meßmöglichkeit besteht in dieser Meßeinrichtung tatsächlich nur eine gemäß dem Strompuls getaktete, serielle Meßwerterfassung, die sich abwechselnd auf Füllstand und Temperatur bezieht. Darüber hinaus wird innerhalb einer Meßperiode ein Meßwert immer nur durch einen bestimmten Zeitpunkt in Form eines Schaltpunkts dargestellt, dessen zeitliche Eingrenzung zusätzlich durch die Frequenz des Pulsgenerators relativiert wird. Ebenso liefert die Temperaturmessung neben der zeitlichen Begrenzung nur ein Ergebnis begrenzter Genauigkeit.

Der Erfindung liegt die Aufgabe zugrunde, ein Verfahren zur Messung des Füllstands einer Flüssigkeit zu schaffen, dessen Meßergebnis unabhängig ist von der Temperatur des umgebenden Mediums, wobei zeitgleich eine Temperaturmessung durchgeführt wird, und der Gesamtaufwand deutlich geringer ist als bei den bekannten Lösungen. Beide Messungen sollen echte Stetigkeit aufweisen und höhere Meßgenauigkeiten und Linearitäten unmittelbar ergeben, ohne daß zusätzliche Korrekturen erforderlich sind.

Das Verfahren gemäß der Erfindung beruht auf dem Einsatz zweier temperaturempfindlicher Meßelemente, von denen das erste mit einem sehr kleinen Meßstrom betrieben wird, der sich vorzugsweise aus einem konstanten, relativ hohen Gleichanteil und einem relativ kleinen, der Linearisierung dienenden, mit der Meßtemperatur veränderlichen Wechselanteil zusammensetzt, so daß die Eigenerwärmung vernachlässigbar gering ist und das Meßsignal mit hoher Genauigkeit der Temperatur des umgebenden Mediums entspricht.

Das zweite Element, das dem ersten vorzugsweise baugleich ist, wird in dessen räumlicher Nähe und auf gleichem Niveau angeordnet, jedoch mit ausreichend großem Abstand, um die thermische Kopplung so gering zu halten, daß ihr Einfluß auf die Meßgenauigkeit vernachlässigbar klein bleibt. Ihm wird ein Meßstrom eingeprägt, dessen Wert höher ist als der Meßstrom durch das erste Meßelement. Für das erfindungsgemäße Verfahren stellt das Merkmal der Baugleichheit der beiden Meßelemente lediglich eine Optimierung im Verhältnis Aufwand zu Funktion dar. Unsymmetrien in den physikalischen Eigenschaften der beiden Elemente können im Rahmen des erfindungsgemäßen Verfahrens und des Ausführungsbeispiels korrigiert werden.

Zur Steuerung des Meßstroms durch das zweite Meßelement dient der Ausgang eines Regelverstärkers in Form eines ersten Differenzverstärkers mit möglichst hohem Verstärkungsfaktor zur Erzielung einer möglichst geringen Regelabweichung, an dessen erstem Eingang die temperaturproportionale Ausgangsspannung eines ersten Meßumformers liegt, für den sich eine Schaltungsanordnung gemäß der DE-OS 3817098 besonders eignet und der das Meßsignal des ersten Meßelements aufbereitet. Auf den zweiten Eingang des Regelverstärkers wird ein der Ausgangsspannung eines zweiten Meßumformers, vorzugsweise ebenfalls gemäß Schaltungsanordnung der DE-OS 3817098, proportionales Signal rückgekoppelt. Der zweite Meßumformer ist dem zweiten Meßelement zugeordnet und bereitet dessen Meßsignal auf.

Die Ausgangsspannung des zweiten Meßumformers ist proportional zur Ausgangsspannung des ersten Meßumformers und stellt somit eine zweite genaue temperaturproportionale Meßspannung dar. Sie setzt sich im wesentlichen aus zwei Komponenten zusammen, die sich additiv überlagern. Einen ersten Anteil liefert die Temperatur des die beiden Meßelemente umgebenden Mediums entsprechend dem Ausgangssignal des ersten Meßumformers. Der zweite Anteil entsteht aus der mittels dem Meßstrom in das Meßelement eingebrachten elektrischen Leistung, die im Meßelement in Wärme umgesetzt wird, und sich als Temperaturerhöhung des Meßelements auswirkt. Proportional zur wechselnden Eintauchtiefe der beiden Meßelemente in einer Flüssigkeit ändert sich die Wärmeableitung aus dem zweiten Meßelement in die Flüssigkeit, mit ihr die effektive Temperatur dieses Meßelements und die Ausgangsspannung des Regelverstärkers und somit die Stärke des Meßstroms durch das zweite Meßelement.

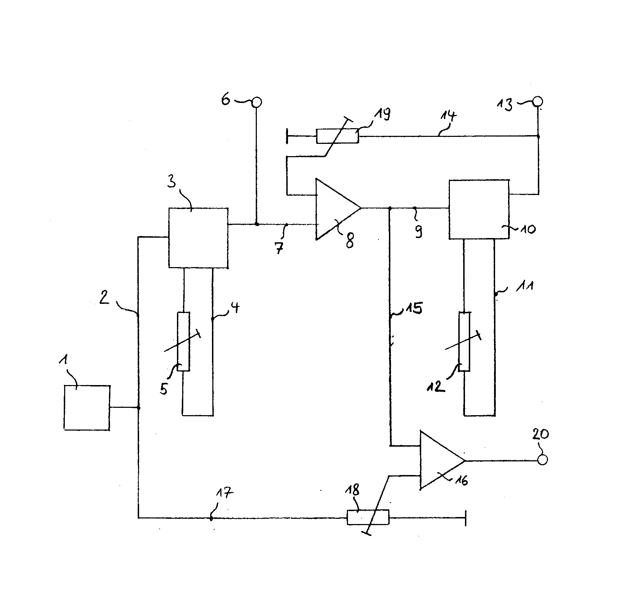

Die Zeichnung zeigt ein dem erfindungsgemäßen Verfahren entsprechendes Prinzipschaltbild.

Eine Referenzspannungsquelle (1) steuert über eine Zuleitung (2) die Meßstromquelle des ersten Meßumformers (3), die diesen Strom dem Meßelement (5) über eine Stromschleife (4) einprägt. Der Spannungsabfall über dem Meßelement (5) wird im Meßumformer (3) aufbereitet und als temperaturproportionales Signal auf den Ausgang (6) und über eine Leitung (7) auf den ersten Eingang eines ersten Differenzverstärkers (8) geführt. Desen Ausgangsspannung steuert über eine Leitung (9) die Stromquelle innerhalb des zweiten Meßumformers (10). Deren Ausgangsstrom wird als Meßstrom über eine Leitung (11) zum zweiten Meßelement (12) geführt. Der zweite Meßumformer (10) setzt das Meßsignal des zweiten Meßelements (12) in eine zweite temperaturproportionale Meßspannung um, die auf den zweiten Temperaturmeßausgang (13) geführt ist. Die Ausgangsspannung wird über eine Leitung (14) und ein Potentiometer (19), das der Kalibrierung der Füllstandsmessung dient, auf den zweiten Eingang des ersten Differenzverstärkers (8) rückkoppelt. Dessen Ausgangsspannung wird noch über eine Leitung (15) auf einen ersten Eingang des zweiten Differenzverstärkers (16), der zur Grenzfüllstands-Erfassung auch als Komparator mit Hysterese-Funktion ausgebildet sein kann, geführt. Am zweiten Eingang des zweiten Differenzverstärkers (16) liegt eine von der Referenzspannungsquelle (1) über eine Leitung (17) und ein Potentiometer (18) zur Nullpunktjustierung abgeleitete Vergleichsspannung. Die füllstandsproportionale Ausgangsspannung des zweiten Differenzverstärkers (16) ist auf den Ausgang (20) geführt.

In einer besonderen Ausführungsform der Meßanordnung zur Grenzfüllstandserfassung besitzen die beiden temperaturempfindlichen Meßelemente (5,12) sehr geringe, nahezu punktförmige geometrische Abmessungen und werden in Höhe eines vorgegebenen Grenzfüllstands angeordnet. Mit dieser Ausführungsform wird höchste Meßgenauigkeit bei höchster Auflösung der Meßsignale und höchster Störsicherheit erreicht. Sie findet insbesondere Anwendung bei der Ölstands-Überwachung in Brennkraftmaschinen von Kraftfahrzeugen, bei der Steuerung von Pumpen in Abfüllanlagen von Tanklagern oder in Dosiereinrichtungen bei der Labor- bzw. Prozeßautomation.

**Patentansprüche**

1. Verfahren zur Messung des Füllstands in Flüssigkeitsbehältern mittels zweier baugleicher, in räumlicher Nähe zueinander und im Bereich eines zu messenden Füllstands angebrachter temperaturempfindlicher Widerstandsmeßelemente (5,12), dadurch gekennzeichnet, daß das erste Meßelement (5) mit einem sehr niedrigen, von einer Referenzspannungsquelle (1) gesteuerten Meßstrom gespeist wird, daß ein zugeordneter erster Meßumformer (3) das Meßsignal des ersten Meßelements (5) in eine der Temperatur des die Meßelemente umgebenden Mediums proportionale Ausgangsspannung (6) des ersten Meßumformers (5) umsetzt, die als Eingangssignal für den ersten Eingang eines ersten Differenzverstärkers (8) eine Stromquelle eines zweiten Meßumformers (10) steuert, die dem zweiten Meßelement (12) einen Meßstrom einprägt, der größer ist als der Meßstrom durch das erste Meßelement, daß der zweite Meßumformer (10) das Meßsignal des zweiten Meßelements (12) in eine zweite, der Temperatur des die Meßelemente (5,12) umgebenden Mediums proportionale Spannung umformt, daß eine der Ausgangsspannung (13) des zweiten Meßumformers proportionale Spannung auf den zweiten Eingang des ersten Differenzverstärkers (8) rückgekoppelt wird, daß die Ausgangsspannung des ersten Differenzverstärkers (8) mittels eines zweiten Differenzverstärkers (16) mit einer Konstantspannung (1) verglichen wird, und daß die Ausgangsspannungen der beiden Differenzverstärker (8,16) lineare Funktionen des Füllstands darstellen.

2. Verfahren nach Anspruch 1, dadurch gekennzeichnet, daß zur Erfassung eines Grenzfüllstands der zweite Differenzverstärker (16) durch einen Komparator mit Hysteresefunktion ersetzt wird, und daß an dessen zweiten Eingang eine dem Grenzwert proportionale Spannung geführt wird.

3. Meßanordnung zur Erfassung eines Grenzfüllstands in Flüssigkeitsbehältern mittels zweier baugleicher, in räumlicher Nähe zueinander angebrachter temperaturempfindlicher Widerstandselemente (5,12), dadurch gekennzeichnet, daß die beiden temperaturempfindlichen Meßelemente (5,12) sehr geringe, nahezu punktförmige Abmessungen aufweisen und in Höhe des vorgegebenen Grenzfüllstands angeordnet sind.

**Europäisches Patentamt**

# EUROPÄISCHER RECHERCHENBERICHT

Nummer der Anmeldung

**EP 90 11 1936**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 950 762   (SMITHS INDUSTRIES LTD.) <br> * Seiten 9,10; Figur 1 * <br> – – – | 1,3 | G 01 F 23/22 <br> G 01 F 23/24 |
| A | GB-A-2 114 303   (KERNFORSCHUNGSANLAGE JULICH GMBH) <br> * Zusammenfassung; Figur 3 * <br> – – – | 1,3 | |
| A | WO-A-8 300 765   (CATERPILLAR TRACTOR CO.) <br> * Zusammenfassung; Seiten 4,5; Figuren 1,2 * <br> – – – – – | 1,3 | |

| RECHERCHIERTE SACHGEBIETE (Int. Cl.5) |
|---|
| G 01 F |

Der vorliegende Recherchenbericht wurde für alle Patentansprüche erstellt

| Recherchenort | Abschlußdatum der Recherche | Prüfer |
|---|---|---|
| Berlin | 21 Februar 91 | VORROPOULOS G |